(19) Europäisches Patentamt
European Patent Office
Office européen des brevets

(11) Veröffentlichungsnummer: **0 604 883 A2**

# (12) EUROPÄISCHE PATENTANMELDUNG

(21) Anmeldenummer: **93120598.3**

(51) Int. Cl.$^{5}$: **B01D 67/00**

(22) Anmeldetag: **21.12.93**

(30) Priorität: **30.12.92 DE 4244532**

(43) Veröffentlichungstag der Anmeldung: **06.07.94 Patentblatt 94/27**

(84) Benannte Vertragsstaaten: **DE FR GB NL**

(71) Anmelder: **HOECHST AKTIENGESELLSCHAFT**
**Brüningstrasse 50**
**D-65929 Frankfurt am Main(DE)**

(72) Erfinder: **Wagener, Reinhard, Dr.**
**Kapellenstrasse 30**
**D-65439 Flörsheim am Main(DE)**
Erfinder: **Schneider, Jürgen, Dr.**
**In der Kling 5**
**D-65529 Waldems(DE)**
Erfinder: **Wildhardt, Jürgen**
**Am Südhang 32**
**D-65510 Hünstetten(DE)**
Erfinder: **Clauss, Joachim, Dr.**
**Johannesallee 41**
**D-65929 Frankfurt am Main(DE)**

## (54) Verfahren zur Herstellung poröser, hydrophiler Membrane.

(57) Verfahren zur Herstellung poröser Membrane, deren poröse Struktur auch im Trockenzustand erhalten bleibt, aus hydrophilen Polymeren, Polymermischungen oder Polymerlegierungen, durch Behandlung der nativen, wasserfeuchten Membrane in einer wäßrigen Lösung enthaltend ein oder mehrere wasserlösliche Polymere und einen oder mehrere Elektrolyte und anschließender Trocknung der Membrane durch Verdunstung oder Verdampfung des die Poren füllenden Wassers.

EP 0 604 883 A2

Die Erfindung betrifft ein Verfahren zur Herstellung von porösen Membranen des Mikro-, Ultra- oder Nanofiltrationstyps aus hydrophilen Polymeren oder deren Mischungen, deren poröse Struktur auch im Trockenzustand erhalten bleibt.

Seit der Einführung asymmetrischer Membrane aus Zelluloseacetat durch Loeb und Sourirajan und aus hydrophoben Polymerisaten sind zahlreiche Membrane insbesondere für Separationen von in Wasser gelösten nieder- und makromolekularen Bestandteilen entwickelt und vorgeschlagen worden, deren Struktur und Eignung in der Literatur angegeben (Desalination, Vol. 35, 5 - 20, (1980)) und die auch in industrieller Praxis oder für medizinische Zwecke mit Erfolg erprobt wurden.

Als entscheidend für den Erfolg und die Wirtschaftlichkeit von Membranprozessen hat sich in allen Anwendungsgebieten das Ausmaß des "Foulings" der Membran durch Porenverstopfung oder irreversible Adsorption an die Membranoberfläche erwiesen. Als vorteilhaft für die Einschränkung oder Unterdrückung des Fouling-Prozesses in wäßrigen Lösungen haben sich Membrane mit hydrophiler Oberfläche gezeigt, die im wesentlichen nach zwei Methoden hergestellt werden können:

i) Durch Verwendung natürlicher oder synthetischer hydrophiler Polymerer zur Membranherstellung.

ii) Durch Oberflächenmodifizierung hydrophober Polymermembrane.

Üblicherweise wird der Weg i), die Membran integral aus einem hydrophilen Polymeren oder einer Polymermischung oder einer Polymerlegierung aufzubauen, bevorzugt, da dieser technisch einfacher durchzuführen ist.

Unter hydrophilen Polymeren werden in diesem Zusammenhang Polymere oder deren Blends (= Mischungen oder Legierungen) verstanden, die eine Gleichgewichtswasseraufnahme bei 25 °C und 80 % relativer Feuchte von mindestens 1 %, bevorzugt aber größer als 3 % aufweisen und die folglich von Wasser so gut benetzt werden, daß Wasser in einer Membranfiltration effektiv mit gelösten oder suspendiertem Probegut um die Adsorption an der Membranoberfläche konkurrieren kann.

Diese Polymere sind gekennzeichet durch eine relativ hohe kritische Oberflächenspannung, wobei die untere Grenze für die kritische Oberflächenspannung etwa 42 mN/m beträgt (US-A- 4 080 743, US-A-4 120 098).

Als hydrophile, membranbildende Polymere sind beispielsweise nicht oder nur partiell veresterte Cellulosederivate (Sourirajan, "Reverse Osmosis", Logos Press, London 1970, S. 55-71) , aromatische Polyamide (EP-A-0 325 962) oder Polyetheramide (DE-A-4 135 341) sowie weitere Stickstoff-verknüpfte Polymere, wie Polyimide, Polyharnstoffe, Polyurethane, oder Polymere mit Stickstoff-Heterozyklen, wie Polybenzimidazole (US-A-4 933 083), bekannt. Eine Zusammenstellung der Werte für die kritische Oberflächenspannung verschiedener Polymerer findet sich in "Polymer Handbook", Hrsg. J. Brandrup, E.H. Immergut, 3. Auflage, New York 1989, Seiten VI 411 - VI 435).

In einigen Fällen kann die Hydrophilie membranbildender Polymere, wie z.B. der Polysulfone oder Polyethersulfone, durch Herstellen von Mischungen oder Legierungen mit wasserlöslichen oder stark wasserquellbaren Polymeren, z.B. Polyvinylpyrrolidon (EP-A-0 082 433) oder Polymerelektrolyten, wie sie beispielsweise in der deutschen Patentanmeldung mit dem Titel "Homogene Polymerlegierung auf der Basis von sulfonierten, aromatischen Polyetherketonen" vorgeschlagen werden, noch verbessert werden. Poröse Membrane vom Mikro-, Ultra- oder Nanofiltrationstyp aus diesen Materialien weisen in vielen Fällen gute antiadsorptive Eigenschaften und ein geringes Fouling auf.

Aufgrund der hohen kritischen Oberflächenspannung der Polymere und ihrer Wegen getrocknet werden. Nach dem Stande der Technik (EP-A-0 082 433, EP-A-0 325 962) verfährt man so, daß man die Porenflüssigkeit Wasser gegen einen schwerflüchtigen, wassermischbaren Weichmacher, z.B. Glyzerin, austauscht und die Membran so vor dem Kollabieren der Poren schützt. Der als Porenfüller verwendete Weichmacher beeinträchtigt allerdings die Haftung weiterer Polymerschichten auf der Membranoberfläche sehr stark. Die Herstellung von Komposit-Membranen oder die Verklebung dieser Membrane in Module ist deshalb gegenüber Membranen aus hydrophoben Polymeren erschwert.

Es besteht deshalb die Aufgabe, ein Verfahren zur Herstellung poröser, hydrophiler Membrane aus Polymeren oder Polymerblends mit einer hohen kritischen Oberflächenspannung zu finden, das es erlaubt, die auf diese Weise hergestellten Membrane auf einfache Weise zu trocknen, ohne daß die Membrane während des Trocknungsprozesses kollabieren, i. e. ohne vollständigen oder verderblich hohen Verlust der hydraulischen Permeabilität der Membran.

Verfahren zur Lösung dieser Aufgabe sind insbesondere für Membrane aus aromatischen Polyamiden bereits in den obengenannten Anmeldungen US-A-4 080 743 und US-A-4 120 098 beschrieben worden. Danach wird das Wasser, welches die Poren der nativen Membran füllt, in mehreren Schritten gegen Flüssigkeiten mit jeweils sinkender Polarität ausgetauscht und schließlich wird die mit einer unpolaren Flüssigkeit benetzte Membran durch Verdampfen dieser Flüssigkeit getrocknet. Bei den Flüssigkeiten handelt es sich um organische Lösemittel, unter anderem auch chlorierte Kohlenwasserstoffe oder Nitrile.

Der im letzten Schritt verdampfte unpolare Porenfüller ist in den bevorzugten Ausführungsformen der oben genannten Anmeldungen der Fluorchlorkohlenwasserstoff 1,1,2-Trichlor-1,2,2-trifluorethan (Freon 113).
Dieses Verfahren hat für eine Anwendung im technischen Maßstab schwerwiegende Nachteile, weil gesundheitsschädliche oder giftige organische Lösemittel verwendet und entweder aufgearbeitet oder entsorgt werden müssen und weil Freon in einem geschlossenen Kreislauf gehandhabt werden muß. Diese Maßnahmen verteuern die Herstellung der Membrane beträchtlich.

Die beschriebenen Verfahren zur Herstellung hydrophiler, poröser Membrane sind also verbesserungsbedürftig dergestalt, daß ein Prozeß gefunden werden muß, der die Membrantrocknung unter Zusatz billiger und toxikologisch unbedenklicher Agentien gestattet.

In der JP-A-3 245 827 wird ein Verfahren beschrieben, welches die Trocknung von Hohlfasermembranen aus hydrophilen, teilaromatischen Polyamiden durch eine Behandlung in 0,3 - 3,0 mol/l konzentrierten, wäßrigen Salzlösungen von Alkali- oder Erdalkalisulfaten und einer anschließenden Ultrazentrifugation ermöglicht. Die angegebenen experimentellen Bedingungen einer 20-minütigen Zentrifugation bei 1400 U/min machen das Verfahren aber praktisch undurchführbar teuer für eine Membranproduktion im technischen Maßstab. Es besteht folglich weiterhin die Aufgabe, ein Verfahren zu finden, welches es erlaubt, poröse Membrane aus hydrophilen Polymeren herzustellen, welche auf einfachem Wege getrocknet werden können, ohne daß zusätzliche, aufwendige Apparaturen oder Verfahrensschritte eingeführt werden müssen.

Gelöst wird diese Aufgabe durch das erfindungsgemäße Verfahren zur Herstellung poröser Membrane, deren poröse Struktur auch im Trockenzustand erhalten bleibt, aus hydrophilen Polymeren, Polymermischungen oder Polymerlegierungen durch eine Behandlung der nativen, i.e. wasserfeuchten, hydrophilen Membrane in einer wäßrigen Lösung enthaltend

i) eines oder mehrere wasserlösliche Polymere, und

ii) einen oder mehrere Elektrolyte und

anschliessender Verdunstung oder Verdampfung des die Poren füllenden Wassers.

Die Membrane werden aus den hydrophilen Polymeren in bekannter Weise nach dem Phaseninversionsverfahren hergestellt. Hierbei wird eine filtrierte und entgaste Lösung geeigneter Viskosität des jeweiligen Polymers auf eine möglichst plane Unterlage (beispielsweise auf ein Trägervlies) als flüssige Schicht ausgebreitet. Danach läßt man auf die flüssige Schicht Fällflüssigkeit einwirken, die mit dem Lösungsmittel der Lösung mischbar ist, in der aber die in der Polymerisatlösung gelösten Polymerisate als Membran ausgefällt werden.
Die Trennleistung der porösen Membrane läßt sich durch eine nachträgliche Behandlung, d.h. nach der Koagulation, bei einer Temperatur von 60 °C - 100 °C mit einer wassermischbaren Flüssigkeit oder mit, gegebenenfalls überhitztem, Wasserdampf gezielt variieren.

Die Membrane werden in einer wäßrigen Lösung eines oder mehrerer Polymerer und eines oder mehrerer Elektrolyte behandelt und können abschließend nach herkömmlichen Verfahren getrocknet werden.

Hydrophile Polymere, Polymermischungen oder Polymerlegierungen, die sich gemäß des erfindungsgemäßen Verfahrens zur Herstellung der hydrophilen Membranen eignen besitzen vorzugsweise eine kritische Oberflächenspannung von mehr als 42 mN/m und eine Gleichgewichtswasseraufnahme bei 25 °C und 80% relativer Feuchte von mehr als 1%, besonders bevorzugt von 3% oder mehr als 3%.

Beispiele für derartige geeignete membranbildende hydrophile Polymere sind nicht oder partiell veresterte Cellulosederivate sowie Polyamide, Polyetheramide oder andere Stickstoff-verknüpfte Polymere wie Polyimide, Polyharnstoffe, Polyurethane oder Polymere mit Stickstoff-Heterocyclen wie Polybenzoxazole oder Polybenzimidazole. Ebenfalls geeignet sind Mischungen oder Legierungen dieser und weiterer membranbildender Polymere, wie Polysulfone oder Polyethersulfone, mit stark wasserquellbaren oder wasserlöslichen Polymeren.

Zur Herstellung der wässrigen Lösungen des erfindungsgemäßen Verfahrens eignen sich allgemein alle wasserlöslichen Polymere, besonders Polyethylenglykole oder partiell hydrolisiertes Polyvinylacetat mit einem mittleren Hydrolysegrad von 70-100% (=Polyvinylalkohol), insbesondere geeignet sind Polyethylenimin oder Polyvinylpyrrolidon.

Die mittlere Molmasse der wasserlöslichen Polymere beträgt vorzugsweise 1000 bis 50 000 g/mol.
Die Konzentration des oder der wasserlöslichen Polymere in der wäßrigen Lösung liegt vorzugsweise im Bereich von 1 Gew.% bis 15 Gew.%, insbesondere im Bereich von 2 Gew.% bis 8 Gew.%.

Bei den Elektrolyten handelt es sich um anorganische Salze, bevorzugt solche des ein-einwertigen Typs, i.e. Halogenide, Pseudohalogenide, Acetate oder Nitrate der Alkalimetalle. Bevorzugt werden allgemein die billigen Salze , wie z.B. NaCl, KCl, $NaNO_3$, $KNO_3$ sowie die Acetate der Alkalimetalle.
Gute Ergebnisse werden auch mit ionischen Detergentien als Elektrolytkomponente allein oder in Kombination mit den genannten Salzen erzielt. Die ionischen Tenside können dabei vom anionischen Typ oder vom

kationischen Typ sein. Beispiele für geeignete anionische Tenside sind Natriumbutan-1-sulfonat, Di-heptylnatrium-sulfosuccinat, Natriumdodecylsulfat, Methyldodecyl-benzolsulfonat. Als kationische Tenside können beispielsweise N-Cetyl-N,N,N-trimethylammoniumbromid, N-Dodecylpyridiniumchlorid und Alkylbenzyldimethyl-ammoniumchlorid eingesetzt werden, um nur einige Tenside zu nennen.

Die Konzentration des oder der Elektrolyten in der wäßrigen Lösung liegt im Bereich von 1 Gew.% bis 30 Gew.%, insbesondere im Bereich von 1 Gew.% bis 15 Gew.%.

Die Behandlung der Membran mit der wässrigen Lösung kann bei Temperaturen im Bereich von 5 °C bis 95 °C durchgeführt werden, vorzugsweise bei Temperaturen im Bereich von 10 bis 40 °C, geschieht jedoch am einfachsten bei Umgebungstemperatur. Die Dauer der Behandlung liegt bei 0,5 min und 120 min, bevorzugt bei 1 min bis 30 min.

Behandlungsdauer und -temperatur richten sich nach den verwendeten membranbildenden Polymeren, so daß beispielsweise bei Verwendung einer temperaturempfindlichen Celluloseacetatmembran eine Temperatur kleiner als 40 °C zu wählen ist.

Allgemein gilt jedoch, daß mit Erhöhung der Temperatur auch die Geschwindigkeit des Stoffaustausches zwischen der Membranphase und dem umgebenden Bad steigt, so daß sich auf diese Weise die Behandlungsdauer verkürzen lässt.

Nach der Behandlung der hydrophilen wasserfeuchten Membran mit der wässrigen Lösung, welche einen oder mehrere Elektrolyte und eines oder mehrere wasserlösliche Polymere enthält, wird die Membran nach den üblichen Verfahren getrocknet, beispielsweise durch Behandlung in einem Luftstrom oder durch Erwärmen der Membran an Luft auf Temperaturen von 40 °C bis 80 °C. Erfindungsgemäß erhält man auf diese Weise poröse Membrane aus hydrophilen Polymeren, deren poröse Struktur auch im Trockenzustand erhalten bleibt.

Vor dem weiteren Einsatz der so hergestellten Membrane empfiehlt es sich, diese durch 2- bis 8-stündiges, vorzugsweise 3- bis 6-stündiges, Einlegen in Wasser zu rekonditionieren.

Die nach dem erfindungsgemäßen Verfahren erhaltenen hydrophilen, porösen Membrane können im trockenen Zustand hervorragend gelagert werden, ohne daß sich deren poröse Struktur verändert. Ferner erleichtern sie das Verkleben zu Modulen, da hier die Haftung weiterer Polymerschichten nicht eingeschränkt oder vermindert ist.

Ein weiterer Vorteil der so hergestellten Membranen ist, daß diese als poröse Unterstruktur für Kompositmembranen verwendet werden können, während bisher nur Membranen aus vergleichsweise hydrophoben Polymeren eingesetzt werden konnten.

Beispiel 1:

Für die Herstellung der Membran wurde in N-Methylpyrrolidon als Lösemittel ein Copolyamid aus
100 mol% Terephthalsäuredichlorid,
35 mol% Paraphenylendiamin,
35 mol% Metaphenylendiamin und
30 mol% 1,4-Bis(4-aminophenoxy)benzol
bei einer Temperatur von 70 °C hergestellt. Die Konzentration der Lösung betrug 15 % (Gewichtsteile bezogen auf 100 Gewichtsteile der Lösung). Diese Lösung wurde in einer Schichtdicke von 200 µm auf ein Polypropylen-Trägervlies aufgebracht und in Wasser bei 20 °C koaguliert. Proben der Membran wurden anschließend in wäßrige Lösungen eines Polymeren und eines Elektrolyten, deren Zusammensetzung in Tabelle 1 angegeben ist, übertragen. Nach 30 min Verweildauer in diesem Bad wurden die Membrane unter den in Tabelle 1 angegebenen Bedingungen getrocknet. Vor der Charakterisierung wurden die Membrane erneut 6 h lang durch Einlegen in Wasser rekonditioniert.

Die hydraulische Permeabilität (Hydr. Perm.) (Ultrafiltration) und das Rückhaltevermögen der Membran gegenüber gelösten Makromolekülen wurden bei Drücken von 3 bar bzw. 15 bar bei 20 °C in einer gerührten zylindrischen Zelle bestimmt (500 U/min, 250 ml, Membranfläche 38 $cm^2$). Das Rückhaltevermögen ist definitionsgemäß

$$R = \frac{c_1 - c_2}{c_1} \cdot 100\ [\%]$$

$c_1$ ist die Konzentration der wäßrigen Testlösung,

$c_2$ ist die Konzentration im Permeat.

Als Testlösung wurde eine 1 %ige wäßrige Lösung eines fraktionierten Dextrans mit Molmasse 10000 g/mol verwendet, erhältlich unter dem Namen Dextran T10 von der Firma Pharmacia. Die Konzentrationen der Testlösungen sowie der Permeate wurden durch Messung der Dichte der wäßrigen Lösungen bestimmt. Die Dichtemessungen erfolgten mit einem Dichtemeßgerät DA 210 der Firma Kyoto Electronics. Tabelle 1 faßt die Meßergebnisse zusammen.

Tabelle 1

| Polymer | Elektrolyt | Trocknung Dauer/Temp. | Hydr.Perm. (Druck/bar) | Rückhalt Dex.T10 |
|---|---|---|---|---|
| 1% PEI(1) | 1% SDS(5) | 20 h/23 °C | 70 l/m²h (3) | 92 % |
| 1% PVP K30(2) | 1% SDS(5) | 20 h/23 °C | 90 l/m²h(15) | 89 % |
| 1% PEG(3) | 1% SDS(5) | 20 h/23 °C | 20 l/m²h (15) | 93 % |
| 1% PVA(4) | 1% SDS(5) | 20 h/23 °C | 35 l/m²h (15) | 94 % |
| / | / | 20 h/23 °C | 0,1 l/m²h (15) | / |

(1) PEI = Polyethylenimin mit mittlerer Molmasse MW ≈ 1200 g/mol, erhältlich unter dem Namen ^R^Lugalvan G 20 von der BASF AG

(2) PVP K30 = Polyvinylpyrrolidon mit mittlerer Molmasse MW ≈ 49000 g/mol, erhältlich unter dem Namen ^R^Luviskol K 30 von der BASF AG

(3) PEG = Polyethlyenglykol mit mittlerer Molmasse MW ≈ 35000 g/mol

(4) PVA = Polyvinylalkohol mit mittlerer Molmasse MW ≈ 84000 g/mol, erhältlich unter dem Namen Mowiol 18-88 von der Hoechst AG

(5) SDS = Natriumdodecylsulfat

Beispiel 2

Für die Herstellung der Membran wurde in N-Methylpyrrolidon ein Copolyamid aus

100 mol% Terephthalsäuredichlorid,

25 mol% Paraphenylendiamin,

50 mol% 3,3'-Dimethyl-4,4'-diaminobiphenyl und

25 mol% 1,4-Bis(4-aminophenoxy)benzol

bei einer Temperatur von 70 °C hergestellt. Die Konzentration der Lösung betrug 6 % (Gewichtsteile bezogen auf 100 Gewichtsteile der Lösung). Diese Lösung wurde in einer Schichtdicke von 200 µm auf ein Polyphenylensulfid-Trägervlies aufgebracht und in Wasser bei 20 °C koaguliert. Proben der Membran wurden analog zu Beispiel 1 in einer wäßrigen, polymer- und elektrolythaltigen Lösung behandelt, deren Zusammensetzung in Tabelle 2 angegeben ist. Anschließend wurden die Membranproben unter den ebenfalls in Tabelle 2 angegebenen Bedingungen getrocknet. Die Membrane wurden nach der Trocknung 6 h lang in $H_2O$ rekonditioniert und anschließend unter den in Beispiel 1 angegebenen Bedingungen die hydraulische Permeabilität und das Rückhaltevermögen für Dextran 10000 bestimmt.

Tabelle 2

| Polymer | Elektrolyt | Trocknung Dauer/Temp. | Hydr.Perm. (Druck/bar) | Rückhalt Dex. T10 |
|---|---|---|---|---|
| 4% PVP K30 | 1% SDS | 48 h/23 °C | 43 l/m²h (3) | 76% |
| 4% PVP K30 | 1% SDS | 2 h/50 °C | 60 l/m²h (3) | 70% |
| 4% PEI | 1% SDS | 48 h/23 °C | 14 l/m²h (3) | 87% |
| 4% PEI | 1% SDS | 2 h/50 °C | 13 l/m²h (3) | 87% |
| Legende und Abkürzungen siehe Tabelle 1. | | | | |

Beispiel 3

Für die Herstellung der Membran wurde in N-Methylpyrrolidon ein Copolyamid aus
100 mol% Terephthalsäuredichlorid,
50 mol% Paraphenylendiamin,
37,5 mol% Metaphenylendiamin und
12,5 mol% 1,4-Bis(4-aminophenoxy)benzol
bei einer Temperatur von 70 °C hergestellt. Die Konzentration der Lösung betrug 10 % (Gewichtsteile bezogen auf 100 Gewichtsteile der Lösung). Diese Lösung wurde in einer Schichtdicke von 200 µm auf ein Polyethylenterephthalat-Trägervlies aufgebracht und in Wasser bei 20 °C koaguliert.
Eine Naßprobe der Membran wurde nach dem in Beispiel 1 angegebenen Verfahren charakterisiert. Es ergab sich bei 3 bar eine hydraulische Permeabilität von 300 $l/m^2h$ sowie ein Rückhaltevermögen für eine 2 %ige wäßrige Lösung von Polyvinylpyrrolidon mit MW ≈ 49000 g/mol ($^R$Luviskol K30, BASF AG) von R = 86 %.
Weitere Proben der Membran wurden in einer wäßrigen Polymer- und Elektrolytlösung 20 min lang behandelt und anschließend getrocknet. Die Membranproben wurden dann 4 h lang in Wasser rekonditioniert und gemäß Beispiel 1 ihre hydraulische Permeabilität und ihr Rückhaltevermögen für PVP K30 bestimmt. Tabelle 3 gibt analog zu Tabelle 1 die experimentellen Bedingungen der Trocknung und die Ergebnisse der Charakterisierung wieder.

Tabelle 3

| Polymer | Elektrolyt | Trocknung Dauer/Temp. | Hydr. Perm. (Druck/bar) | Rückhalt Dex. T10 |
|---|---|---|---|---|
| 4% PVP K30 | 1% SDS | 20 h/23 °C | 100 $l/m^2h$ (3) | 87% |
| 4% PVP K17(1) | 1% SDS | 2 h/50 °C | 130 $l/m^2h$ (3) | 87% |
| 4% PVP K90(2) | 1% SDS | 2 h/50 °C | 15 $l/m^2h$ (3) | 60% |
| 4% PVP K30 | 1% NaCl | 2 h/50 °C | 60 $l/m^2h$ (3) | 92% |
| 4% PVP K30 | 5% NaCl | 2h/50 °C | 150 $l/m^2h$ (3) | 83% |
| 4% PVP K30 | 15% NaCl | 2h/50 °C | 2000 $l/m^2h$ (3) | 3% |
| 6% PVP K30 | 5% NaCl | 2h/50 °C | 160 $l/m^2h$ (3) | 80% |
| 8% PVP K30 | 5% NaCl | 2h/50 °C | 270 $l/m^2h$ (3) | 54% |
| 4% PVP K30 | 5% KSCN | 24h/50 °C | 60 $l/m^2h$ (3) | 89% |
| 4% PVP K30 | 10% KSCN | 24h/50 °C | 100 $l/m^2h$ (3) | 89% |
| 4% PVP K30 | 5% $Li_2SO_4$ | 12h/50 °C | 1000 $l/m^2h$ (3) | 60% |
| 4% PVP K30 | 5% $CH_3COOK$ | 60h/23 °C | 220 $l/m^2h$ (3) | 80% |
| 4% PVP K30 | 10% $CH_3COOK$ | 60h/23 °C | 500 $l/m^2h$ (3) | 55% |

(1) PVP K17 = Polyvinylpyrrolidon mittlerer Molmasse MW = 9000 g/mol ($^R$Luviskol K17, BASF)
(2) PVP K90 = Polyvinylpyrrolidon mittlerer Molmasse MW = $1 \cdot 10^6$ g/mol ($^R$Luviskol K90, BASF)
Weitere Abkürzungen siehe Legende zu Tabelle 1.

Beispiel 4

Für die Herstellung der Membran wurde die in Beispiel 3 hergestellte Lösung eines aromatischen Polyamids unter Rühren mit 5 Gew. % (Gewichtsteile Feststoff bezogen auf Gewichtsteile Lösung) Polyvinylpyrrolidon K 30 versetzt. Die resultierende Lösung wurde in einer Schichtdicke von 200 µm auf ein Polypropylen Trägervlies aufgebracht und in Wasser bei 20 °C ausgefällt. Eine Naßprobe der Membran wurde nach dem in Beispiel 1 angegebenen Verfahren charakterisiert. Es wurde eine hydraulische Permeabilität von 350 $l/m^2h$ bei 3 bar und ein Rückhaltevervögen von 85 % für PVP K30 gemessen. Eine weitere Probe der Membran wurde 15 min lang bei 23° C in eine wäßrige Lösung von 4 % Polyvinylpyrrolidon K30 und 1% Natriumdodecylsulfat eingelegt und anschließend 2 h bei 50 °C getrocknet. Die Membran wurde dann 4 h lang in Wasser rekonditioniert und gemäß Beispiel 1 charakterisiert. Die hydraulische Permeabilität wurde bei 3 bar nun zu 180 $l/m^2h$ und das Rückhaltevermögen für PVP K30 zu 89% bestimmt.

Beispiel 5

Für die Herstellung der Membran wurde die in Beispiel 3 hergestellte Lösung eines aromatischen Polyamids unter Rühren mit 5 Gew. % (Gewichtsteile Feststoff bezogen auf Gewichtsteile Lösung) eines teilweise sulfonierten Polyetherketons der Formel

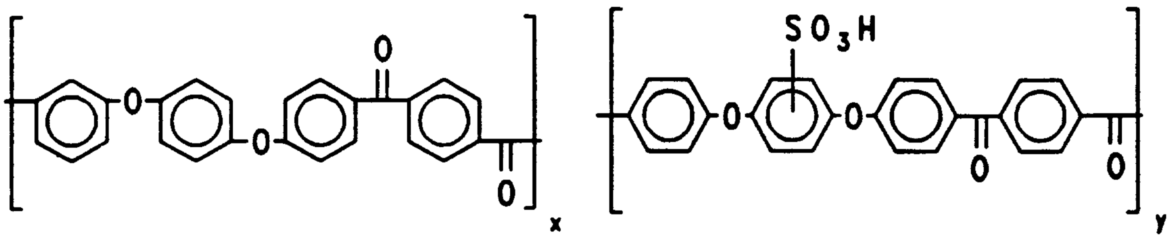

wobei x = 0,28 und y = 0,72,
und der mittleren Molmasse MW = 40000 g/mol versetzt.
Die resultierende Lösung wurde in einer Schichtdicke von 200 µm auf ein Polypropylen Trägervlies aufgebracht und in Wasser bei 20 °C ausgefällt.
Es wurden eine Naßprobe der Membran sowie eine nach der in Beispiel 4 beschriebenen Methode getrocknete und wieder rekonditionierte Membranprobe gemäß der in Beispiel 1 genannten Methode charakterisiert.

| | |
|---|---|
| Naßprobe: | hydraulische Permeabilität: 400 $l/m^2h$ (3 bar) |
| | Rückhaltevermögen PVP K30: 96% |
| getrocknete | und rekonditionierte Probe: |
| | hydraulische Permeabilität: 190 $l/m^2h$ (3 bar) |
| | Rückhaltevermögen PVP K30: 95% |

Beispiel 6:

Es wurde eine Celluloseacetat-Membran hergestellt, indem eine Lösung enthaltend 25 Gew.% Celluloseacetat (Eastman 398-10), 45 Gew.% Aceton und 30 Gew. % Formamid in einer Schichtdicke von 200 µm auf ein Polyethylenterephthalat-Trägervlies aufgebracht und bei 6 °C in Wasser ausgefällt wurde. Für eine Naßprobe der Membran wurden nach dem in Beispiel 1 beschriebenen Verfahren eine hydraulische Permeabilität von 36 $l/m^2h$ und ein Rückhaltevermögen von 98% für Dextran T10 bestimmt. Weitere Proben der Membran wurden in einer wässrigen Polymer- und Elektrolytlösung 15 Minuten lang behandelt und anschliessend getrocknet. Nach der Rekonditionierung in Wasser wurden die Membrane charakterisiert. Tabelle 4 gibt analog zu Tabelle 1 die Trocknungsbedingungen und die Meßergebnisse wieder.

Tabelle 4

| Polymer | Elektrolyt | Trocknung Dauer/Temp. | Hydr. Perm. (Druck/bar) | Rückhalt Dex. T10 |
|---|---|---|---|---|
| 5% PVP K17(1) | 5% NaCl | 16 h/23 °C | 28 l/m²h (3) | 96% |
| 5% PEI(2) | 5% NaCl | 16 h/23 °C | 35 l/m²h (3) | 98% |
| 5% PEG(3) | 5% $CH_3COOK$ | 16 h/23 °C | 33 l/m²h (3) | 98% |
| 5% PVA(4) | 5% $CH_3COOK$ | 16 h/23 °C | 32 l/m²h (3) | 98% |

(1)PVP K17 = Polyvinylpyrrolidon mit mittlerer Molmasse $M_{\bar{w}}$ 9000 g/mol (RLuviskol K17, BASF AG)
(2)PEI = Polyethylenimin mit mittlerer Molmasse $M_{\bar{w}}$ 1200 g/mol (RLugalvan G 20, BASF AG)
(3)PEG = Polyethylenglykol mit mittlerer Molmasse $M_{\bar{w}}$ 3000g/mol
(4)PVA = Polyvinylalkohol mit mittlerer Molmasse $M_{\bar{w}}$ 26000g/mol (RMowiol 18-88, Hoechst AG)

Beispiel 7

Eine Membran aus einer Polysulfon-Polyvinylpyrrolidon Polymermischung wurde wie folgt hergestellt: Es wurde eine Lösung enthaltend 12 Gew.% Polysulfon (RUdel 3500, Union Carbide), 6 Gew.% Polyvinylpyrrolidon (RLuviskol K90, BASF) und 4 Gew.% LiCl in NMP in einem Rührkessel präpariert. Die Lösung wurde in einer Schichtdicke von 200 µm auf ein Polypropylen-Trägervlies ausgestrichen und in Wasser bei 20 °C koaguliert. Eine Naßprobe der Membran zeigte unter den Meßbedingungen des Beispiels 1 die folgende Trennleistung:

Hydraulische Permeabilität: 240 l/m²h

Rückhaltevermögen PVP K30: 75 %

Proben der Membran wurden analog zu Beispiel 6 behandelt, getrocknet und wieder rekonditioniert. Tabelle 5 zeigt die experimentellen Bedingungen sowie Ergebnisse der Charakterisierung.

Tabelle 5

| Polymer | Elektrolyt | Trocknung Dauer/Temp. | Hydr. Perm. (Druck/bar) | Rückhalt Dex. T10 |
|---|---|---|---|---|
| 5% PVP K30 | 5% NaCl | 2 h/50 °C | 200 l/m²h (3) | 60 % |
| 5% PVP K17 | 5% NaCl | 2 h/50 °C | 100 l/m²h (3) | 75 % |
| 5% PEI | 5% NaCl | 2 h/50 °C | 120 l/m²h (3) | 77 % |
| 5% PEG | 5% $CH_3COOK$ | 2 h/50 °C | 2 l/m²h (3) | / |
| 5% PVA | 5% $CH_3COOK$ | 2 h/50 °C | 40 l/m²h (3) | 92 % |
| Abkürzungen siehe Legende Tabelle 4 | | | | |

## Patentansprüche

1. Verfahren zur Herstellung poröser Membrane, deren poröse Struktur auch im Trockenzustand erhalten bleibt, aus hydrophilen Polymeren, Polymermischungen oder Polymerlegierungen, dadurch gekennzeichnet, daß die nativen, wasserfeuchten Membrane in einer wäßrigen Lösung enthaltend ein oder mehrere wasserlösliche Polymere und einen oder mehrere Elektrolyte behandelt und anschließend durch Verdunsten oder Verdampfen des die Poren füllenden Wassers getrocknet werden.

2. Verfahren nach Anspruch 1, dadurch gekennzeichnet, daß die hydrophilen Polymere oder Polymermischungen oder Polymerlegierungen eine kritische Oberflächspannung von mehr als 42 mN/m besitzen.

3. Verfahren nach Anspruch 1, dadurch gekennzeichnet, daß die hydrophilen Polymere oder Polymermischungen oder Polymerlegierungen eine Gleichgewichtswasseraufnahme bei 25 °C und 80 % relativer Feuchte von mehr als 1 %, bevorzugt aber ≧ 3 % aufweisen.

4. Verfahren nach Anspruch 1, dadurch gekennzeichnet, daß es sich bei den membranbildenden hydrophilen Polymeren um nicht oder nur partiell veresterte Cellulosederivate oder um Polyamide, Polyetheramide oder andere Stickstoffverknüpfte Polymere wie Polyimide, Polyharnstoffe, Polyurethane oder Polymere mit Stickstoff-Heterozyklen wie Polybenzoxazole oder Polybenzimidazole handelt oder um Mischungen oder Legierungen dieser und weiterer membranbildender Polymere, wie Polysulfone oder Polyethersulfone, mit stark wasserquellbaren oder wasserlöslichen Polymeren.

5. Verfahren nach Anspruch 1, dadurch gekennzeichnet, daß als wasserlösliche Polymere in der auf die Membran einwirkenden Lösung Polyethylenglykol, partiell hydrolisiertes Polyvinylacetat, Polyethylenimin oder Polyvinylpyrrolidon eingesetzt werden.

6. Verfahren nach Anspruch 5, dadurch gekennzeichnet, daß die mittleren Molmassen der wasserlöslichen Polymere im Bereich von 1000 g/mol bis 50000 g/mol liegen.

7. Verfahren nach Anspruch 1, dadurch gekennzeichnet, daß es sich bei den Elektrolyten um anorganische Salze des ein-einwertigen Typs handelt, vorzugsweise um Halogenide, Pseudohalogenide, Acetate oder Nitrate der Alkalimetalle.

8. Verfahren nach Anspruch 1, dadurch gekennzeichnet, daß es sich bei den verwendeten Elektrolyten um anionische oder kationische Tenside handelt.

9. Verfahren nach Anspruch 1, dadurch gekennzeichnet, daß als Elektrolytkomponente ionische Tenside in Kombination mit anorganischen Salzen verwendet werden.

10. Verfahren nach Anspruch 1, dadurch gekennzeichnet, daß die Konzentration der Polymere in der wäßrigen Lösung im Bereich von 1 Gew.% bis 15 Gew.% liegt.

11. Verfahren nach Anspruch 10, dadurch gekennzeichnet, daß die Konzentration der Polymere in der wässrigen Lösung im Bereich von 2 Gew.% bis 8 Gew.% liegt.

12. Verfahren nach Anspruch 1, dadurch gekennzeichnet, daß die Konzentration des Elektrolyten im Bereich von 1 Gew.% bis 30 Gew.% liegt.

13. Verfahren nach Anspruch 12, dadurch gekennzeichnet, daß die Konzentration des Elektrolyten im Bereich von 1 Gew.% bis 15 Gew.% liegt.

14. Verfahren nach Anspruch 1, dadurch gekennzeichnet, daß die Behandlung in der wäßrigen Lösung des oder der Polymere und des oder der Elektrolyten bei Temperaturen von 5 °C bis 95 °C durchgeführt wird.

15. Verfahren nach Anspruch 14, dadurch gekennzeichnet, daß die Behandlung in der wäßrigen Lösung bei Temperaturen im Bereich von 10 bis 40 °C durchgeführt wird.

16. Verfahren nach Anspruch 1, dadurch gekennzeichnet, daß die Behandlung in der wäßrigen Lösung des oder der Polymere oder des oder der Elektrolyten 0,5 Minuten bis 120 Minuten dauert.